# EUROPÄISCHE PATENTSCHRIFT

(11) **EP 2 569 833 B1**
(45) Veröffentlichungstag und Bekanntmachung des Hinweises auf die Patenterteilung: **27.06.2018**
(21) Anmeldenummer: 11782371.6
(22) Anmeldetag: 06.05.2011
(51) Int. Cl.: H01T 13/05, H01T 21/02, B29C 45/14

(54) **HERSTELLUNGSVERFAHREN FÜR ELEKTRISCHES BAUTEIL SOWIE ELEKTRISCHES BAUTEIL**
PRODUCTION METHOD FOR AN ELECTRIC COMPONENT AND ELECTRIC COMPONENT
PROCÉDÉ DE FABRICATION D'UN COMPOSANT ÉLECTRIQUE ET COMPOSANT ÉLECTRIQUE

(30) Priorität: 11.05.2010 DE 102010016881
(43) Veröffentlichungstag der Anmeldung: 20.03.2013
(73) Patentinhaber: Motortech GmbH, 29223 Celle (DE)
(72) Erfinder: SCHULZE, Claus, 29303 Bergen (DE)
(74) Vertreter: Hansen, Jochen
(86) Internationale Anmeldenummer: PCT/DE2011/075101
(87) Internationale Veröffentlichungsnummer: WO 2012/022307

(56) Entgegenhaltungen:
- GB-A- 2 200 258
- JP-A- 3 046 782
- US-A- 2 399 402
- US-A- 3 914 003
- US-A- 5 476 695

## Beschreibung

Die Erfindung betrifft ein Herstellungsverfahren für elektrische Bauteile für Hochspannungsanwendungen, insbesondere für Zündanlagen, die wenigstens ein elektrisches Funktionsteil und einen Isolator aufweisen, wobei das elektrische Funktionsteil innerhalb des Isolators angeordnet ist, mit den Schritten:
Herstellen des Isolators als Hohlkörper,
Einlegen des elektrischen Funktionsteils in den Isolator und
Vergiessen des sich bildenden Zwischenraumes zwischen dem elektrischen Funktionsteil und dem als Hohlkörper ausgebildeten Isolator unter Vakuum mit einer Vergussmasse.

Unter "elektrisches Funktionsteil" ist beispielsweise ein elektrischer Leiter, ein elektrischer Widerstand, eine elektrische Schaltung etc. mit zugeordneten Kontaktierungsmitteln zu verstehen.

Elektrische Bauteile für Hochspannungsanwendungen bedürfen einer hochwirksamen Isolation. Elektrische Bauteile für Hochspannungsanwendungen der hier interessierenden Art besitzen wenigstens ein elektrisches Funktionsteil und einen Isolator, der das elektrische Funktionsteil umgibt. Der Isolator ist somit als Hohlkörper ausgebildet. Insbesondere wenn zwischen dem elektrischen Funktionsteil und der Umgebung wenig Platz für eine Isolation verbleibt, sind hohe Anforderungen an den Isolator zu stellen. Für die hohe Isolationsgüte eines Isolators ist ein sachgerechtes Herstellungsverfahren evident. Für Zündanlagen, bei denen eine Hochspannung zur Zündkerze des Verbrennungsmotors, insbesondere Gasmotors, geführt wird, sind hohe Isolationsanforderungen bei wechselnden Umgebungsbedingungen zu erfüllen. Zündkerzen und Stecker der Zündkabel wiesen daher häufig einen Isolator aus technischer Keramik auf. Keramische Isolatoren, beispielsweise aus Aluminiumoxyd, sind jedoch sehr spröde und daher anfällig bei Schlagbeanspruchung. Kleinste Risse im Isolator führen zu erheblichen Funktionsstörungen, die bis zum Motorschaden führen können. Ferner sind technische Keramiken aufwendig in der Verarbeitung und teuer.

Es wurde daher versucht, technische Keramiken durch Kunststoffe zu ersetzen. Als ein geeigneter Substitutionskunststoff wurde Polytetrafluorethylen (kurz PTFE, auch bekannt unter dem Handelsnamen "Teflon®") festgestellt und beispielsweise für Isolatoren in Zündkabelsteckern verwendet. Für die Herstellung von PTFE-Isolatoren als Hohlkörper, werden daher meist rundstangenförmige Halbzeuge aus PTFE verwendet, die dann mittels spanabhebender Bearbeitung zu den gewünschten Hohlkörpern in Form des Isolators bearbeitet werden. Diese Bearbeitung ist relativ zeitaufwendig, erfordert erhebliche Maschineninvestitionen und erzeugt bei der spanabhebenden Fertigung große Mengen an Reststoffen. Da PTFE als Halbzeug relativ teuer ist und durch die spanabhebende herstellungsweise meist nur 40 % oder weniger des als Halbzeug eingekauften Materials das Endprodukt bilden, schlagen auch die Materialkosten bei einer Massenfertigung erheblich zu Buche. Ferner ist Nachteil, dass in PTFE-Isolatoren keine elektrischen Funktionsteile in vertretbarem Aufwand eingeklebt und/oder eingegossen werden können, da PTFE ein sehr inertes Material ist. Um diese Problematik zu entgehen, wurde beispielsweise in einem PTFE-Hohlisolator im Bereich eines einzufügenden elektrischen Funktionsteils eine Keramikhülse in den PTFE-Hohlkörper eingepresst, um dann das elektrische Funktionsteil in die Keramikhülse einkleben zu können. Dieses mehrschrittige Herstellungsverfahren aus verschiedenen Werkstoffen ist jedoch sehr aufwendig und aufgrund der miteinander verbundenen, unterschiedlichen Werkstoffe im Wechseleinfluss der Umgebungsbedingungen problematisch.

Aus der JP 3046782 A ist ein Zündkerzenstecker mit einer Entladungsröhre als elektrisches Funktionsteil bekannt, das in einem Gehäuse angeordnet ist und mit flüssigem Kunstharz darin vergossen wird. Ferner ist aus der US 5,476,695 ein Zündkerzenstecker bekannt, der aus einem hülsenförmigen Körper aus einer Mischung von thermoplastischen Kunststoffen mit Glasfaserverstärkung besteht.

Aus der DE 103 567 42 A1 ist eine Zündspulenvorrichtung bekannt, die in einem Kerzenlochbauteil als sogenannte Integralzündspule installiert ist, bei dem sie mit dem Kerzenlochbauteil einen Innenraum bildet, mit einer Primärspule und einem um die Außenfläche der Primärspule gewickelten Primärwicklungsdraht, wobei mindestens ein gewisser Teil der Außenfläche der Primärspule aus kristallinem Harz gebildet ist, wobei dieser Teil mit dem Innenraum in Fluidverbindung steht. Da bei dieser Anordnung die Primärwicklungen und auch der Primärwicklungsträger ungeschützt im Kerzenschacht stecken und heißen Brenngasen, sogenannten "Blow-by-Gasen" ausgesetzt sind, wird dort vorgeschlagen, den Wicklungsträger aus einem Hochleistungskunststoff, beispielsweise PPS, herzustellen. Insbesondere handelt es sich um eine Primärspule bei einer geschlitzten Zündspule mit freiliegender Primärwicklung, bei der die Ausbildung des Wicklungskörpers aus PPS eine längere Lebensdauer verleiht, wenn es von heißen Brenngasen umströmt wird. Weiter wird in der DE 103 567 42 A1 ein Sekundärwicklungsträger aus unverstärktem Kunststoff beschrieben, der teilweise eingebettet in den Primärwicklungsträger aus PPS verbaut ist. Diese sehr spezielle Ausbildung soll die Standzeit derartiger Integralspulen erhöhen, Hinweise zur Ausbildung von Hochspannungsbauteilen zur kostengünstigen Serienfertigung können aus dieser Schrift nicht hergeleitet werden.

Aus der US 2,399,402 A, die den Oberbegriff des Anspruchs 1 offenbart, ist das eingangsdargestellte Herstellungsverfahren bekannt. Dabei wird der Hohlkörper jedoch nicht aus einem thermoplastischen Kunststoff im Spritzgussverfahren hergestellt, vielmehr handelt es sich um metallische Tassenformteile, die nicht der elektrischen Isolierung dienen, sondern lediglich Abschirmungselemente sind. Der Hohlraum, der sich innerhalb dieser Abschirmungselemente aufspannt, wird mit einem flüssigen, später abhärtenden Isolierstoff befüllt.

Aus der GB 2 200 258 A ist die Herstellung von Isolatoren im Bereich von Zündkerzensteckern aus einem thermoplastischen Kunststoff im Spritzgussverfahren bekannt.

Ausgehend von der US 2,399,402 A ist es Aufgabe der Erfindung, ein Herstellungsverfahren für ein elektrisches Bauteil für Spannungsanwendungen anzugeben, bei dem eine sehr hohe Spannungsfestigkeit, ideale mechanische Eigenschaften mit hoher Reißfestigkeit, hoher Schlagzähigkeit und hohe thermische Beständigkeit erreicht wird und somit die Stanzzeit derartig hergestellter elektrischer Bauteile erheblich verbessert wird.

Gelöst wird diese Aufgabe mit einem Herstellungsverfahren für ein derartiges Bauteil gemäß Anspruch 1.

Ein Isolator, der aus Polyphenylensulfid mit Glasfaseranteil besteht, bietet eine sehr hohe Spannungsfestigkeit, ideale mechanische Eigenschaften mit hoher Reißfestigkeit, hoher Schlagzähigkeit und hohe thermische Beständigkeit.

Eine Vergussmasse, die aus einem Polyurethanharz oder einen Epoxydharz besteht, erlaubt eine sichere Fixierung des elektrischen Funktionsteils im Isolator und vermeidet die Bildung von Rissen, Bläschen oder anderen Fehlstellen, die zu einem elektrischen Durchschlag des elektrischen Bauteils bei Hochspannungsanwendungen führen könnten.

Durch die Verwendung eines thermoplastischen Kunststoffs kann der Isolator als Hohlkörper kostengünstig im Spritzgussverfahren hergestellt werden. Beim Spritzgussverfahren wird nur die für die Hohlkörperform erforderliche Materialmenge verbraucht, womit der Materialeinsatz verringert wird. Ferner wird durch das Spritzgiessen eine spanabhebende Bearbeitung entbehrlich. In der Massenfertigung liegen deutliche Kostenvorteile. In den so hergestellten Hohlkörper kann das elektrische Funktionsteil eingelegt (vorkonfektioniert) werden, um dann anschließend den sich ausbildenden Zwischenraum zwischen dem elektrischen

Funktionsteil und dem als Hohlkörper ausgebildeten Isolator mit einer Vergussmasse vergießen zu können. Der aus thermoplastischen Kunststoff hergestellte
Hohlkörper weist eine gute Haftfähigkeit zu verschiedensten Vergussmassen auf, so dass das im Isolator eingesetzte Funktionsteil sicher mit der Vergussmasse fixiert ist und keine Risse, Hohlräume oder ähnliche Fehlstellen in dem Zwischenraum ausgebildet werden, die die Hochspannungsfestigkeit deutlich reduzieren würden und im Zusammenhang mit Umgebungseinflüssen, insbesondere Feuchtigkeit zu Totalausfall führen könnten. Vorrichtungsgemäß wird die Erfindung dadurch gelöst, dass der Isolator aus Polyphenylensulfid mit Glasfaseranteil besteht. Dieser im Spritzgussverfahren zu verarbeitende Kunststoff weist eine sehr hohe Spannungsfestigkeit, die über 15 kV/mm und insbesondere über 20 kV/mm beträgt. Ein Glasfaseranteil von 30 - 50 %, besonders bevorzugt ca. 40 %, bewirkt ideale mechanische Eigenschaften mit hoher Reißfestigkeit (über 180 MPa), einer Schlagzähigkeit bei 23°C von 45 KJ/m² oder höher und eine hohe thermische Beständigkeit bis Temperaturen von 230°C und insbesondere 260°C. Nur durch die optimalen Isoliereigenschaften, die rissfreie Verarbeitung und das hohlraumfreie Ausgießen des Zwischenraums zwischen im Isolator eingelegtem elektrischen Funktionsteil und der Innenwandung des Isolator-Hohlkörpers wird eine Hochspannungsfestigkeit erreicht, die auch für die sehr hohen Zündspannungen für Gasmotor-Zündanlagen ausreicht.

Um auch kleinste Bläschen beim Vergiessen des Zwischenraums zwischen dem elektrischen Funktionsteil und dem Isolator sicher vermeiden zu können, erfolgt das Vergießen unter Vakuum, bevorzugt bei 50 bis 1 mbar, besonders bevorzugt 30 bis 10 mbar. Die elektrische Durchschlagfestigkeit und insbesondere die Standzeit derartig hergestellter elektrischer Bauteile wird durch das Vergiessen unter Vakuum erheblich verbessert. Dabei ist ein Vakuum ab 50 mbar ausreichend. Versuche haben gezeigt, dass ab einem Vakuum von 30 mbar bis 10 mbar eine in der Serienfertigung kontrollierte Herstellung ohne Bläschenbildung in der abgebundenen Vergussmasse mit großer Sicherheit erzielt werden kann. Ein stärkeres Vakuum verbessert die Eigenschaften dann nur noch marginal. Im Gegenzug dürften der Energieaufwand und damit die Herstellungskosten überpropotional wachsen.

Die Vergussmasse kann aus einem Polyurethanharz oder einen Epoxydharz bestehen. Beide Harze erlauben eine sichere Fixierung des elektrischen Funktionsteils im Isolator und vermeiden bei geeigneter Vergusstechnik die Bildung von Rissen, Bläschen oder anderen Fehlstellen, die zu einem elektrischen Durchschlag des elektrischen Bauteils bei Hochspannungsanwendungen führen könnten.

Um die geforderten elektrischen und mechanischen Anforderungen für ein derartig zusammengestelltes, elektrisches Bauteil zu erfüllen, hat die Vergussmasse eine Dichte von mindestens 1,5 g/cm³, insbesondere 1,7 g/cm³.

Um eine Überhitzung in dem elektrischen Bauteil, insbesondere bei der Anwendung als Zündkerzenstecker, zu verhindern, hat die Vergussmasse eine Wärmeleitfähigkeit von 0,6 W/mK, insbesondere von 0,65 W/mK oder höher. Somit wird die vom Motor über die Zündkerze eingeleitete Wärme in ausreichender Menge nach außen geführt, so dass eine Überhitzung des elektrischen Bauteils und insbesondere der Vergussmasse verhindert wird. Gleichwohl ist die Vergussmasse temperaturresitent bis 150°C, insbesondere bis 180°C (Temperaturklasse H).

Um auch die hohe Spannungsfestigkeit bei den üblichen wechselnden und auch oft sehr feuchten Umgebungsbedingungen sicher stellen zu können, weist die Vergussmasse eine geringe Wasserabsorption auf, die unter 0,1 % sowohl beim 10-Tage-Test bei 23°C, wie auch beim 30-Minuten-Test bei 100°C ist.

Nachfolgend werden zwei Ausführungsbeispiele der Erfindung anhand der beiliegen-den Zeichnung detailliert beschrieben.

Darin zeigt:
- Fig. 1: einen Längsschnitt durch einen Zündkerzenstecker-Einsatz und
- Fig. 2: einen Längsschnitt durch einen Zündkerzenstecker.

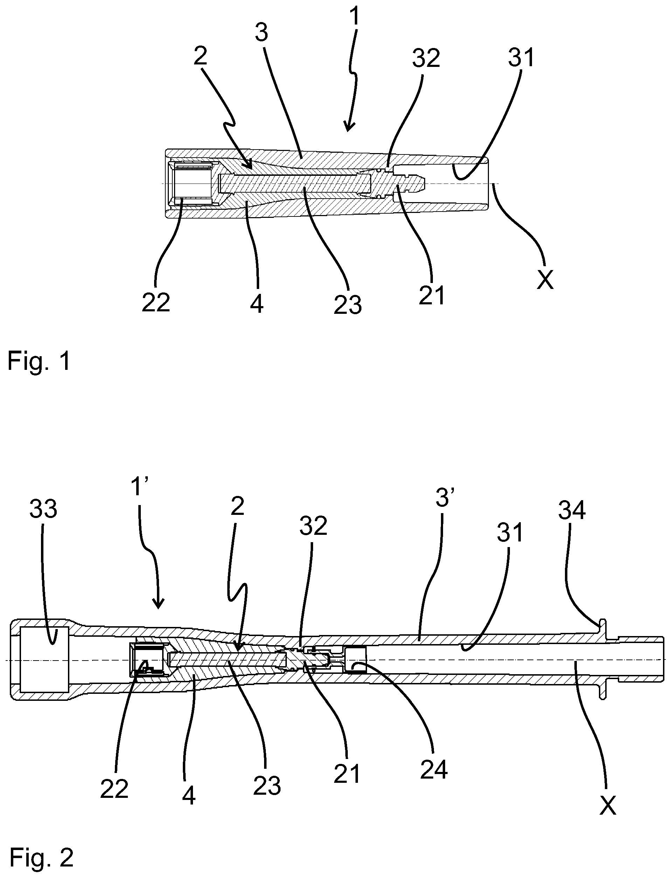

Fig. 1 zeigt ein elektrisches Bauteil 1 für Zündanlagen, nämlich einen Zündkerzenstecker-Einsatz in einem Längsschnitt. Der Zündkerzenstecker-Einsatz 1 wird in eine äußere Hülle aus Kunststoff, beispielsweise PTFE, eingefügt und bildet zusammen mit dieser Hülle den Zündkerzenstecker. Der Zündkerzenstecker-Einsatz 1 ist um die in Fig. 1 gestrichelt dargestellte Längsachse X rotationssymmetrisch aufgebaut. Im Inneren des Zündkerzenstecker-Einsatzes 1 ist ein elektrisches Funktionsteil 2 angeordnet. Das elektrische Funktionssteil 2 besteht bei diesem Anwendungsbeispiel aus einem steckerförmigen Kontaktierungselement 21 an einem Ende und einem muffenartigen Kontaktierungselement 22 am anderen Ende und einem zwischen den beiden Kontaktierungselementen 21, 22 angeordneten Widerstand 23.

Ferner weist der Zündkerzenstecker-Einsatz 1 einen Isolator 3 auf, der im Wesentlichen als zylindischer Hohlkörper ausgebildet ist. Der Isolator 3 besteht aus einem thermoplastischen Kunststoff, insbesondere Polyphenylensulfid mit Glasfaseranteil, der im Spritzgussverfahren hergestellt worden ist.

In einem entlang der Längsachse X ausgebildeten durchgängigen Hohlraum 31 im Isolator 3 ist das elektrische Funktionsteil 2 von der in Fig. 1 linken Seite eingesteckt. Dabei ist das elektrische Funktionsteil 2 mit seinem steckerartigen Kontaktierungselement 21 an einem inneren, flanschartigen Vorsprung 32 des Isolators 3 definiert eingesteckt. Im Übrigen bildet sich zwischen dem in den Isolator 3 eingesteckten elektrischen Funktionsteil 2 und dem Isolator 3 ein Zwischenraum, der mit einer Vergussmasse 4 blasen- und rißfrei vergossen ist. Die Vergussmasse 4 ist ein hochspannungsfestes Epoxydharz, das bevorzugt unter Vakuum von 30 - 10 mbar in den Zwischenraum eingegossen wird.

In Fig. 2 ist in einem bevorzugten Ausführungsbeispiel ein Zündkerzenstecker 1' dargestellt, der einen im Spritzgussverfahren hergestellten langgestreckten

Isolator 3' aufweist, der bereits die vollständige äußere Gestalt des Zündkerzensteckers 1' wiedergibt. Funktionsgleiche Bauteile zur in Fig. 1 beschriebenen Ausführungsform eines Zündkerzenstecker-Einsatzes 1 sind hier in Fig. 2 in dem Zündkerzenstecker 1' mit gleichen Bezugszeichen bezeichnet.

Der langgestreckte Isolator 3' ist ebenfalls als Hohlkörper mit einem durchgängigen Hohlraum 31 ausgestattet. In dem durchgängigen Hohlraum 31 verengend ist ein flanschartiger Vorsprung 32 ausgebildet, der das elektrische Funktionsteil 2 wie zur Fig. 1 beschrieben, aufnimmt und fixiert. Dabei wird das elektrische Funktionsteil 2 bestehend aus steckerartigem Kontaktierungselement 21, muffenartigem Kontaktierungselement 22 und einem die beiden Kontaktierungselemente 21 und 22 verbindenden Widerstand 23 von in Zeichenebene in Fig. 2 links in den langgestreckten Isolator 3' in dessen durchgängigem Hohlraum 31 bis zum flanschartigen Vorsprung 32 eingesteckt, an dem das steckerartige Kontaktierungselement 21 gehalten wird. Der zwischen dem elektrischen Funktionsteil 2 und dem Isolator 3'ausgebildete Zwischenraum wird dann mit der Vergussmasse 4 , beispielsweise ein Epoxydharz, bevorzugt unter Vakuum vergossen.

Im Gegensatz zum Zündkerzenstecker-Einsatz 1 gemäß Fig. 1 weist der langgestreckte Isolator 3' bereits in Fig. 2 linksseitig eine Verlängerung auf, die als Zündkerzenaufnahme 33 dient. Die Zündkerzenaufnahme 33 umschließt den oberen Kopf der Zündkerze und dient als Führung und elektrische Isolierung. Am anderen Ende des langgestreckten Isolators 3' ist ein langgestreckter Zündkerzensteckerschaft 34 dargestellt, in dem ein nicht dargestelltes Zündkabel vor Beschädigungen gesichert aufgenommen wird. An dem steckerartigen Kontaktierungselement 21 des elektrischen Funktionsteils 2 ist in Fig. 2 ein Zündkabelkontaktierungselement 24 wiedergegeben, das zum nicht dargestellten Zündkabel gehört.

Der Vorteil bei der Ausgestaltung gemäß Fig. 2 liegt darin, dass der gesamte Zündkerzenstecker in seiner äußeren Umgrenzung aus einem langgestreckten Isolator 3' gebildet ist, der gleichzeitig innenseitig das elektrische Funktionsteil 2 aufnimmt und führt und dabei für die erforderliche elektrische Isolierung sorgt. Ferner hat der für den Isolator 3' verwendete Kunststoff, nämlich bevorzugt Polyphenylensulfid mit Glasfaseranteil, neben der hohen Spannungsfestigkeit von insbesondere 25 kV/mm auch eine hohe mechanische Festigkeit und Temperaturbeständigkeit. Der Zündkerzenstecker eignet sich insbesondere für

die Verwendung in Gasmotoren, die eine besonders hohe Zündspannung benötigen und dafür die zu realisierende Spannungsfestigkeit erforderlich ist.

In der Herstellung können erhebliche Kosten gespart werden, da der als Zündkerzensteckerhülle ausgebildete langgestreckte Isolator 3'aus dem glasfaserverstärkten Polyphenylensulfid im Spritzgussverfahren kostengünstig hergestellt, nachfolgend mit dem elektrischen Funktionsteil 2 bestückt und dann mit der Vergussmasse vergossen werden kann, womit nur ein dreischrittiges Verfahren für die Herstellung des Zündkerzensteckers erforderlich ist.

### Bezugszeichenliste

- 1, 1': elektrisches Bauteil, Zündkerzenstecker-Einsatz, Zündkerzenstecker

- 2: elektrisches Funktionsteil
- 21: steckerartiges Kontaktierungselement
- 22: muffenartiges Kontaktierungselement
- 23: Widerstand
- 24: Zündkabelkontaktierungselement

- 3, 3': Isolator
- 31: durchgängiger Hohlraum
- 32: flanschartiger Vorsprung
- 33: Zündkerzenaufnahme
- 34: Zündkerzensteckerschaft

- 4: Vergussmasse

- X: Längsachse

## Patentansprüche

1. Herstellungsverfahren für elektrische Bauteile (1) für Hochspannungsanwendungen, insbesondere für Zündanlagen, die wenigstens ein elektrisches Funktionsteil (2) und einen Isolator (3) aufweisen, wobei das elektrische Funktionsteil (2) innerhalb des Isolators (3) angeordnet ist, mit den Schritten:
a) Herstellen des Isolators (3) als Hohlkörper,
b) Einlegen des elektrischen Funktionsteils (2) in den Isolator (3),
c) Vergießen des sich bildenden Zwischenraumes zwischen dem elektrischen Funktionsteil (2) und dem als Hohlkörper ausgebildeten Isolator (3) unter Vakuum mit einer Vergussmasse (4), **dadurch gekennzeichnet, dass**:
der Isolator im Spritzgussverfahren aus einem thermoplastischen Kunststoff, nämlich aus Polyphenylensulfid mit Glasfaseranteil hergestellt wird und die Vergussmasse (4) aus Epoxydharz oder Polyurethan besteht.

2. Herstellungsverfahren nach Anspruch 1, **dadurch gekennzeichnet, dass** das Vergießen unter Vakuum bei 50 bis 1 mbar, bevorzugt 30 bis 10 mbar erfolgt.

3. Herstellungsverfahren nach Anspruch 1 oder 2, **dadurch gekennzeichnet, dass** dem Kunststoff Glasfaserabschnitte in einem Mengenverhältnis von 30 bis 50 %, bevorzugt ca. 40 %, zugefügt wird.

4. Herstellungsverfahren nach Anspruch 1,2 oder 3, **dadurch gekennzeichnet, dass** die Vergussmasse (4) eine Spannungsfestigkeit von 15 kV/mm oder höher hat.

5. Herstellungsverfahren nach Anspruch 4, **dadurch gekennzeichnet, dass** die Vergussmasse (4) eine Spannungsfestigkeit von 20 kV/mm, bevorzugt 25 kV/mm, oder höher hat.

6. Herstellungsverfahren nach Anspruch 4 oder 5, **dadurch gekennzeichnet, dass** die Vergussmasse (4) eine Dichte von mindestens 1,5 g/cm³, insbesondere 1,7 g/cm³ hat.

7. Herstellungsverfahren nach einem der vorangehenden Ansprüche, **dadurch gekennzeichnet, dass** die Vergussmasse (4) eine Wärmeleitfähigkeit von 0,6 W/mK, insbesondere von 0,65 W/mK oder höher hat.

8. Herstellungsverfahren nach einem der vorangehenden Ansprüche, **dadurch gekennzeichnet, dass** die Vergussmasse (4) temperaturresitent bis 150°C, insbesondere bis 180°C (Temperaturklasse H) ist.

9. Herstellungsverfahren nach einem der vorangehenden Ansprüche, **dadurch gekennzeichnet, dass** die Vergussmasse (4) eine geringe Wasserabsorption aufweist, die unter 0,1 % sowohl beim 10-Tage-Test bei 23°C, wie auch beim 30-Minuten-Test bei 100°C ist.

## Claims

1. Manufacturing method for electric components (1) for high-voltage applications, in particular for ignition systems, which have at least one electrical functional part (2) and an insulator (3), the electrical functional part (2) being arranged within the insulator (3), comprising the steps:
a) manufacturing the insulator (3) as a hollow body,
b) inserting the electrical functional part (2) in the insulator (3),
c) casting a casting compound (4) into the gap formed between the electrical functional part (2) and the insulator (3) formed as a hollow body, the casting being carried out under vacuum:
**characterised in that**:
the insulator is manufactured by injection moulding from a thermoplastic material, namely from polyphenylene sulphide with a glass fibre component and the casting compound (4) is composed of epoxy resin or polyurethane.

2. Manufacturing method according to claim 1, **characterised in that** the casting is carried out under vacuum at 50 to 1 mbar, preferably 30 to 10 mbar.

3. Manufacturing method according to claim 1 or 2, **characterised in that** glass fibre portions are added to the thermoplastic in a quantitative proportion of 30 to 50%, preferably about 40%.

4. Manufacturing method according to claim 1, 2 or 3, **characterised in that** the casting compound (4) has a dielectric strength of 15 kV/mm or higher.

5. Manufacturing method according to claim 4, **characterised in that** the casting compound (4) has a dielectric strength of 20 kV/mm, preferably 25 kV/mm, or higher.

6. Manufacturing method according to claim 4 or 5, **characterised in that** the casting compound (4) has a density of at least 1.5 g/cm³, in particular 1.7 g/cm³.

7. Manufacturing method according to one of the preceding claims, **characterised in that** the casting compound (4) has a thermal conductivity of 0.6 W/mK, in particular of 0.65 W/mK or higher.

8. Manufacturing method according to one of the preceding claims, **characterised in that** the casting compound (4) is temperature resistant to 150°C, in particular to 180°C (temperature class H).

9. Manufacturing method according to one of the preceding claims, **characterised in that** the casting compound (4) has a low water absorption which is below 0.1% in both the 10-day test at 23°C, as well as the 30-minute test at 100°C.

## Revendications

1. Procédé de fabrication de composants électriques (1) pour des applications à haute tension, en particulier pour des systèmes d'allumage, qui présentent au moins un élément fonctionnel électrique (2) et un isolant (3), l'élément fonctionnel électrique (2) étant disposée à l'intérieur de l'isolant (3), avec des étapes consistant :
a) à fabriquer l'isolant (3) sous la forme d'un corps creux,
b) à introduire l'élément fonctionnel (2) dans l'isolant (3),
c) à couler sous vide une masse de remplissage (4) dans l'espace intermédiaire formé entre l'élément fonctionnel électrique (2) et l'isolant (3) sous la forme d'un corps creux,
**caractérisé en ce que**
l'isolant est fabriqué par un procédé de moulage par injection à partir d'un matériau synthétique thermoplastique, à savoir à partir de poly(sulfure de phénylène) avec une fraction de fibres de verre, et la masse de remplissage (4) se compose de résine époxyde ou de polyuréthane.

2. Procédé de fabrication selon la revendication 1, **caractérisé en ce que** le coulage est réalisé sous vide par 50 à 1 mbar, de préférence 30 à 10 mbar.

3. Procédé de fabrication selon la revendication 1 ou 2, **caractérisé en ce que** des tronçons de fibres de verre sont ajoutés au matériau synthétique dans un rapport de 30 à 50 %, de préférence d'environ 40 %.

4. Procédé de fabrication selon l'une des revendications 1, 2 ou 3, **caractérisé en ce que** la masse de remplissage (4) présente une rigidité diélectrique de 15 kV/mm ou plus.

5. Procédé de fabrication selon la revendication 4, **caractérisé en ce que** la masse de remplissage (4) présente une rigidité diélectrique de 20 kV/mm, de préférence de 25 kV/mm, ou plus.

6. Procédé de fabrication selon la revendication 4 ou 5, **caractérisé en ce que** la masse de remplissage (4) présente une densité d'au moins 1,5 g/cm³, en particulier de 1,7 g/cm³.

7. Procédé de fabrication selon l'une des revendications précédentes, **caractérisé en ce que** la masse de remplissage (4) présente une conductivité thermique de 0,6 W/mK, en particulier de 0,65 W/mK, ou plus.

8. Procédé de fabrication selon l'une des revendications précédentes, **caractérisé en ce que** la masse de remplissage (4) résiste à une température jusqu'à 150 °C, en particulier jusqu'à 180 °C (classe de température H).

9. Procédé de fabrication selon l'une des revendications précédentes, **caractérisé en ce que** la masse de remplissage (4) présente un faible pouvoir d'absorption de l'eau qui est inférieur à 0,1 % tant lors de l'essai de 10 jours à 23 °C que lors de l'essai de 30 minutes à 100 °C.
